# EUROPEAN PATENT APPLICATION

(11) **EP 4 787 046 A1**
(43) Date of publication of application: **05.08.2026**
(21) Application number: 25154851.7
(22) Date of filing: 30.01.2025
(51) Int. Cl.: G02B 21/06, A61B 5/00, G02B 21/36, G06N 3/08

(54) **METHOD AND SYSTEM FOR CONSTRUCTING AN IMAGE OF A SAMPLE**

(71) Applicant: CellaVision AB, 223 62 Lund (SE)
(72) Inventor: Almers, Martin, 226 51 Lund (SE); Hedlund, Sven, 226 57 Lund (SE); Jönsson, Jesper, 224 80 Lund (SE)
(74) Representative: AWA Sweden AB

(57) **Abstract**

The present inventive concept relates to a method (30) for training a machine learning model to construct an image of a sample. The method (30) comprises: acquiring (S300) a training set of images of a training sample (142) by: illuminating (S302) the training sample (142) with a plurality of illumination patterns formed by a first set of light-emitting elements (112) and a second set of light-emitting elements (114), wherein the first set of light-emitting elements (112) is configured to emit light having a first optical bandwidth and the second set of light-emitting elements (114) is configured to emit light having a second optical bandwidth narrower than the first optical bandwidth, and capturing (S304), for each illumination pattern of the plurality of illumination patterns, an image of the training sample (142); receiving (S310) a ground truth comprising one or more images of the training sample (142); and training (S320) the machine learning model to construct the image of a sample using the training set of images and the ground truth.

## Description

### Technical field

The present inventive concept relates to construction of an image of a sample.

### Background of the invention

Fourier Ptychography Microscopy is an emerging computational microscopy technique that can overcome the fundamental tradeoff between a microscope's resolution and field-of-view. The principle of Fourier Ptychography involves synthesis of a wider numerical aperture from a set of images acquired at various illumination angles. This results in increased resolution compared to a conventional microscope using, e.g., bright-field illumination. Each image is typically acquired under illumination of coherent light sources at various angles of incidence (typically from an array of light-emitting diodes), and the acquired image set is combined using an iterative phase retrieval algorithm into a final image.

An issue with using coherent light sources is that such light sources typically emit monochromatic light, and the final image formed by the iterative phase retrieval algorithm therefore only includes information within a narrow spectrum of wavelengths (i.e., corresponding to the wavelengths of the monochromatic light).

Thus, there exists a need for improvements within the art.

### Summary of the invention

In view of the above, it is an object of the present inventive concept to, at least partly, mitigate, alleviate, or eliminate one or more of the above-identified deficiencies in the art and disadvantages singly or in any combination and solve at least the above-mentioned problem.

According to a first aspect, a method for training a machine learning model to construct one or more images of a sample is provided. The method of the first aspect comprises: acquiring a training set of images of a training sample by: illuminating the training sample with a plurality of illumination patterns formed by a first set of light-emitting elements and a second set of light-emitting elements, wherein the first set of light-emitting elements is configured to emit light having a first optical bandwidth and the second set of light-emitting elements is configured to emit light having a second optical bandwidth narrower than the first optical bandwidth, and capturing, for each illumination pattern of the plurality of illumination patterns, an image of the training sample; receiving a ground truth comprising one or more images of the training sample; and training the machine learning model to construct the one or more images of a sample using the training set of images and the ground truth.

The wording "training" as in "training sample" is herein used to refer to a sample used during training, as opposed to a general sample which the machine learning model is trained to construct an image of. The machine learning model may of course be able to construct an image depicting the training sample. However, the machine learning model may also be able to construct images of other samples as well, which may not be part of the training set of images. Put differently, the machine learning model may, after training, be able to construct images of samples not used for training the machine learning model. Thus, the machine learning model is trained (using training sample(s)) to construct images of any sample. The wording "the sample" may be used herein to refer to either the samples used during training or during inference (i.e., the samples of which captured images may be input into a trained machine learning model), depending on the context.

Within the context of this disclosure, the wording "illumination patterns" may be construed as different ways of illuminating the sample using light-emitting elements of the first set of light-emitting elements and/or the second set of light-emitting elements. Each illumination pattern may, e.g., be formed by simultaneously illuminating the sample at one or more illumination angles of a plurality of illumination angles, and/or by varying the number of light-emitting elements of the first set of light-emitting elements and/or the second set of light-emitting elements that emit light.

Within the context of this disclosure, "optical bandwidth" should be construed as a range of wavelengths (or frequencies) of light. Hence, the optical bandwidth of light emitted by a light-emitting element should be understood as a range of wavelengths (or frequencies) of light that the light-emitting element is configured to emit. A skilled person is aware of different definitions of such range. For instance, the range may be a full width at half max (FWHM) or any other suitable measure.

Within the context of this disclosure, the wording "ground truth" should be construed as information that is known to be real and/or true. Hence, in this context, since the machine learning model is trained to construct an image using the ground truth and the training set of digital images, the ground truth may represent an image of the training sample. Such actual image of the training sample may be captured using conventional techniques, e.g., using bright-field microscopy.

By illuminating the training sample with a plurality of illumination patterns and capturing an image for each of the plurality of illumination patterns, phase information (typically referred to as quantitative phase within the art) associated with the training sample may be determined. This can be understood as information of different portions of a Fourier space (i.e., the spatial frequency domain) associated with the training sample being captured for different illumination patterns (e.g., different illumination directions and/or different illumination angles). This technique may be known in the art as Fourier Ptychographic Microscopy, FPM. The phase information may, in turn, be used to replicate the training sample at different focus positions (i.e., positions of the training sample relative to an image-forming assembly of the microscope system used to capture images of the training sample). Further, information regarding a refractive index (or a spatial distribution of a refractive index) associated with the training sample may be captured. This can be understood as an effect of refraction of light being dependent on an angle of incidence (i.e., illumination angle) for light illuminating the training sample and the refractive index of the training sample. Furthermore, by illuminating the training sample with a plurality of illumination patterns and capturing an image for each illumination pattern of the plurality of illumination patterns, information regarding finer details of the training sample may be captured than what normally is resolvable by, e.g., a conventional microscope used to image the training sample.

Hence, since the training set of images comprises information associated with one or more of fine details of the training sample, a refractive index associated with the training sample, and phase information associated with the training sample, this information may be used in the training of the machine learning model, which may, in turn, allow for a machine learning model being trained to construct an image of the training sample more accurately than what would be allowed in case the training set of digital images was captured using, e.g., conventional bright-field illumination, conventional dark-field illumination, or by using conventional microscopy. Using conventional microscopy, it may be difficult, or even impossible, to capture information associated with the refractive index associated with the training sample and/or phase information associated with the training sample. Put differently, since an image captured using conventional microscopy may simultaneously contain information regarding the refraction of light impinging from directions corresponding to overlapping portions of the Fourier space associated with the training sample, it may be impossible using such techniques to determine phase information associated with the training sample and/or information related to the refractive index of the training sample. Put differently, it may not be possible to determine such information related to the training sample using conventional microscopy. Illuminating the training sample with a plurality of illumination patterns may further allow for capturing information relating to details of the training sample which are finer than what normally is allowed, e.g., using conventional microscopy illumination. Thus, an imaging system having a relatively lower magnification may be used while still being able to capture information related to such fine details of the training sample. Using an imaging system having a relatively lower magnification may, in turn, allow for images of larger portions of the training sample to be captured at each imaging position. Hence, the entire training sample may be scanned by capturing images at relatively fewer positions which, in turn, may allow for a faster and/or more efficient scanning of the training sample.

Hence, the present inventive concept allows for training a machine learning model with images (i.e., the training set of images) captured using two sets of light-emitting elements configured to emit light having different optical bandwidths. Since the first optical bandwidth is wider than the second optical bandwidth, the first set of light-emitting elements is capable of capturing more information associated with the training sample (i.e., for a broader range of wavelengths), whereas the second set of light-emitting elements allows for capturing information associated with the training sample for a narrower range of wavelengths.

An advantage associated with using light having a broader optical bandwidth (e.g., light emitted by the first set of light-emitting elements) is that more information (i.e., information associated with a broader range of wavelengths) associated with the training sample may be acquired than what may be possible when using light having a narrower optical bandwidth (e.g., light emitted by the second set of light-emitting elements). For instance, the broader optical bandwidth may allow information associated with colors of the training sample may be acquired. An advantage associated with using light having a narrower optical bandwidth (e.g., light emitted by the second set of light-emitting elements) is that information associated with finer details and/or a phase associated with the training sample may be acquired which may not be possible when using light having a broader optical bandwidth (e.g., light emitted by the first set of light-emitting elements). Thus, by comprising the first and second sets of light-emitting elements, the present inventive concept may provide both of these advantages, i.e., the machine learning model may be trained using information associated with a broader range of wavelengths of the training sample and information associated with a phase (and/or finer details) of the training sample. Therefore, by including images of the training sample captured using light of the first optical bandwidth and light of the second optical bandwidth allows the machine learning model to be trained using more information of the training sample. Thus, the trained machine learning model may thereby construct images of samples having a wider range of color, and with more detail and/or phase information.

The first optical bandwidth may be 100 nm or broader. For instance, the light-emitting elements of the first set of light-emitting elements may be configured to emit light having an optical bandwidth of 200 nm or broader. Accordingly, the light-emitting elements of the first set may allow illuminating the training sample with a wide range of wavelengths. This may, in turn, allow for capturing information of the training sample for a wide range of wavelengths. Such information may, e.g., be used during training of the machine learning model. For instance, it may allow the trained machine learning model to reconstruct an image of a sample in color. However, it is to be understood that the information regarding the wide range of wavelengths may be used for other purposes as well. For instance, it may be used to classify a sample and/or identify one or more objects in a sample.

The second optical bandwidth may be 50 nm or narrower. Accordingly, the light-emitting elements of the second set may allow illuminating the training sample with a narrow range of wavelengths. This may, in turn, allow for capturing information of finer details of the training sample and/or a phase associated with the training sample. It may be advantageous in case light-emitting elements arranged to illuminate the training sample at great angles of incidence (e.g., greater than half of an angle corresponding to a numerical aperture of a microscope objective used to image the training sample) form part of the second set of light-emitting elements. This, since illuminating the training sample from great angles of incidence may correspond to capturing information regarding high spatial frequencies associated with the training sample, and the information regarding high spatial frequencies may be more sensitive to the optical bandwidth. Thus, the information regarding high spatial frequencies may be more accurate in case light having a narrower optical bandwidth is used when capturing such information. This information may be used during training of the machine learning model. For instance, it may allow the trained machine learning model to reconstruct an image of a sample at a high resolution (i.e., higher than a resolution of one or more images of the training set of images). However, it is to be understood that the information regarding the narrow range of wavelengths may be used for other purposes as well. For instance, it may be used to classify a sample and/or identify one or more objects in a sample. As a further example, the trained machine learning model may be able to construct a phase image of a sample using the information regarding the narrow range of wavelengths. Further, when capturing information of a phase associated with the training sample, it may be advantageous in case light-emitting elements arranged to illuminate the training sample at both great angles of incidence (e.g., greater than half of an angle corresponding to a numerical aperture of a microscope objective used to image the training sample) and at small angles (e.g., smaller than half of the angle corresponding to the numerical aperture of the microscope objective used to image the training sample). This, since information of the phase associated with the training sample may be captured for several angles of incidence. This information may be used during training of the machine learning model. For instance, it may allow the trained machine learning model to reconstruct a complex-valued image of a sample. However, it is to be understood that the information regarding the narrow range of wavelengths may be used for other purposes as well. It is, however, to be understood that the information of a phase associated with the training sample may be captured for fewer angles of incidence, e.g., for only the great angles described above, while still allowing the trained machine learning model (i.e., trained using the captured information) to reconstruct the complex-valued image of the sample.

A resolution of at least one image of the one or more images of the ground truth may be higher than a resolution of at least one image of the training set of images. Accordingly, the machine learning model may be trained to construct a high-resolution image of a sample from one or more low-resolution images of the sample. Here, "high resolution" and "low resolution" should be understood as in relation to each other. Hence, a "high-resolution image" is an image having a higher resolution than a "low-resolution image".

At least one image of the one or more images of the ground truth may be a complex-valued image of the training sample. Accordingly, the machine learning model may be trained to construct a complex-valued image of a sample from one or more amplitude images of the sample. Here, a "complex-valued image" should be construed as an image comprising phase information. Thus, a "complex-valued image of the training sample" may comprise phase information associated with the training sample. The complex-valued image of the ground truth may, e.g., be constructed using conventional Fourier ptychography microscopy, or any other suitable technique capable of determining (or computing) phase information associated with the training sample.

The first set of light-emitting elements may be configured to emit light having a wavelength within a first wavelength range, and the second set of light-emitting elements may comprise light-emitting elements configured to emit light having a wavelength within a second wavelength range different from the first wavelength range. Accordingly, the images of the training set may be captured using light of different wavelengths and different optical bandwidths. This may, in turn, provide an improved training of the machine learning model. For instance, shorter wavelengths of light typically allow for a higher resolution in Fourier ptychography microscopy imaging. However, interesting features of the training sample may be present in other wavelength ranges as well (e.g., longer wavelengths). Thus, by using light having different wavelength ranges to illuminate the training sample may allow capturing more information (e.g., information regarding finer details, phase and/or color) which may be used for training of the machine learning model.

The second set of light-emitting elements may further comprise light-emitting elements configured to emit light having a wavelength within a third wavelength range different from the first wavelength range and the second wavelength range. Accordingly, the training sample may additionally be illuminated by a wavelength in the third wavelength range. This may, in turn, allow for more information (i.e., information associated with the wavelength in the third wavelength range) of the training sample to be captured. This information may, in turn, be used during training of the machine learning model, whereby an improved machine learning model may be allowed.

The second set of light-emitting elements may further comprise light-emitting elements configured to emit light having a wavelength within a fourth wavelength range different from the first wavelength range, the second wavelength range, and the third wavelength range. Accordingly, the training sample may additionally be illuminated by a wavelength in the fourth wavelength range. This may, in turn, allow for more information associated with the training sample to be captured. In particular, the light-emitting elements of the second set of light-emitting elements may be configured to together cover a larger wavelength range (i.e., the second, third, and fourth wavelength ranges) while each light-emitting element of the second set may be configured to emit light having a narrow optical bandwidth (i.e., narrower than the first optical bandwidth).

Each light-emitting element of the first set of light-emitting elements and the second set of light-emitting elements may be configured to illuminate the training sample at an illumination angle of a plurality of illumination angles.

In this context, an "illumination angle" should be understood as an angle at which incident light illuminates the training sample. An illumination angle may therefore correspond to a direction from which a light-emitting element is configured to illuminate the training sample. The illumination angle may be defined relative to a central axis of a microscope system used to capture images of the training sample (i.e., the training set of images). Thus, an illumination angle may be in a range from 0 degrees to 180 degrees. Further, no illumination angles may be smaller than 0 degrees, i.e., there may be no negative illumination angles. An illumination angle of 0 degrees may correspond to a direction from a light-emitting element toward a microscope objective of the microscope system and parallel to an optical axis of the microscope objective of the microscope system. Furthermore, no illumination angles may be larger than 180 degrees. The central axis may, e.g., be an axis of symmetry of imaging optics of the microscope system. For instance, the axis of symmetry of the imaging optics may be an optical axis of a microscope objective used to image the training sample. Hence, an illumination angle may be an angle relative to an optical axis of a microscopy system.

Accordingly, an optical bandwidth of light may be adapted to the illumination angle with which that light illuminates the training sample. In Fourier ptychography microscopy, certain illumination angles may be more sensitive to optical bandwidth than others. For instance, higher spatial frequencies, which may translate to great illumination angles, may be more sensitive to the optical bandwidth, and light having a narrower optical bandwidth may therefore be used for such illumination angles. Further, light having a broader optical bandwidth may be used for lower spatial frequencies (i.e., small illumination angles) as Fourier ptychography microscopy may be less sensitive to broader optical bandwidths for such frequencies.

The plurality of illumination angles may comprise a first range of illumination angles and a second range of illumination angles. Illumination angles of the second range may be greater than illumination angles of the first range. A majority of the light-emitting elements configured to illuminate the training sample at illumination angles of the second range may belong to the second set of light-emitting elements.

Accordingly, the training sample may predominantly be illuminated by light having a narrower optical bandwidth at greater illumination angles. Thereby, improved information associated with higher spatial frequencies (i.e., greater illumination angles) of the training sample may be captured. An improved trained machine learning model may thereby be allowed.

A majority of the light-emitting elements configured to illuminate the training sample at illumination angles of the first range may belong to the first set of light-emitting elements. Accordingly, information associated with a broad range of wavelengths may be captured for lower spatial frequencies (i.e., smaller illumination angles). An improved trained machine learning model may thereby be allowed.

An illumination pattern of the plurality of illumination patterns may be formed by one or more light-emitting elements configured to illuminate the training sample at illuminations angles corresponding to non-overlapping portions of a Fourier space associated with the training sample. An illumination patterns of the plurality of illumination patterns may be formed by activating (i.e., emitting light from) one or more of the plurality of light-emitting elements. Hence, each illumination pattern may be formed by simultaneously illuminating the training sample at one or more illumination angles. Each illumination pattern of the plurality of illumination patterns may be formed by simultaneously illuminating the training sample at one or more illumination angles corresponding to non-overlapping portions of a Fourier space associated with the training sample. At least two illumination angles of two different illumination patterns may correspond to overlapping portions of the Fourier space associated with the training sample. Accordingly, the information associated with the training sample captured in an image for an illumination pattern formed by illuminating the training sample at illumination angles corresponding to non-overlapping portions of the Fourier space associated with the training sample may be less entangled (or intertwined) compared to in an image captured using an illumination pattern formed by illuminating the training sample at illumination angles corresponding to overlapping portions of the Fourier space associated with the training sample.

At least one illumination angle of the plurality of illumination angles may be greater than an angle corresponding to a numerical aperture of a microscope objective used to acquire the training set of images.

The numerical aperture of the microscope objective may be a dimensionless number associated with a range of angles over which the microscope objective accepts light. Hence, an illumination angle larger than the numerical aperture of a microscope objective may be understood as an illumination angle corresponding to an angle larger than the range of angles over which the microscope objective accepts light.

Accordingly, information about higher spatial frequencies of the training sample, and thereby finer details of the training sample, than what the microscope objective normally allows (i.e., using conventional microscopy illumination) may be captured. This may, in turn, allow for the microscope objective to capture phase information associated with the training sample and information relating to details of the training sample not normally being resolvable by the microscope objective, which may be used in the training of the machine learning model. Put differently, by illuminating the training sample at an illumination angle corresponding to an angle larger than the numerical aperture of the microscope objective may allow for an improved training of the machine learning model to construct an image of a sample.

According to a second aspect, a method for constructing one or more images of a sample is provided. The method according to the second aspect comprises: acquiring an input set of images of the sample by: illuminating the sample with a plurality of illumination patterns formed by a first set of light-emitting elements and a second set of light-emitting elements, wherein the first set of light-emitting elements is configured to emit light having a first optical bandwidth and the second set of light-emitting elements is configured to emit light having a second optical bandwidth narrower than the first optical bandwidth, and capturing, for each illumination pattern of the plurality of illumination patterns, an image of the sample; inputting the input set of images into a machine learning model trained according to the method of the first aspect; and receiving, from the machine learning model, an output comprising one or more constructed images of the sample.

The above-mentioned features of the first aspect, when applicable, apply to this second aspect as well. In order to avoid undue repetition, reference is made to the above.

According to a third aspect, a device for training a machine learning model to construct an image of a sample is provided. The device comprises circuitry configured to execute: a training set receiving function configured to receive a training set of images of a training sample, wherein the training set of images is acquired by: illuminating the training sample with a plurality of illumination patterns formed by a first set of light-emitting elements and a second set of light-emitting elements, wherein the first set of light-emitting elements is configured to emit light having a first optical bandwidth and the second set of light-emitting elements is configured to emit light having a second optical bandwidth narrower than the first optical bandwidth, and capturing an image of the training sample for each illumination pattern of the plurality of illumination patterns; a ground truth receiving function configured to receive a ground truth comprising one or more images of the training sample; and a training function configured to train the machine learning model to construct the image of a sample using the received training set of images and the received ground truth.

The above-mentioned features of the first and second aspects, when applicable, apply to this third aspect as well. In order to avoid undue repetition, reference is made to the above.

According to a fourth aspect, a microscopy system is provided. The microscopy system comprises: a first set of light-emitting elements configured to emit light having a first optical bandwidth; and a second set of light-emitting elements configured to emit light having a second optical bandwidth narrower than the first optical bandwidth; an image sensor; a microscope objective arranged to image a sample onto the image sensor; and circuitry configured to execute: an acquisition function configured to acquire an input set of images by being configured to: control the first set of light-emitting elements and the second set of light-emitting elements to illuminate the sample with a plurality of illumination patterns, and control the image sensor to capture an image for each illumination pattern of the plurality of illumination patterns, and the circuitry being further configured to execute: an image construction function configured to: input the input set of images into a machine learning model trained according to the method of the first aspect, and receive, from the machine learning model, an output comprising a constructed image of the sample.

The above-mentioned features of the first, second, and third aspects, when applicable, apply to this fourth aspect as well. In order to avoid undue repetition, reference is made to the above.

Further features of, and advantages with, the present inventive concept will become apparent when studying the appended claims and the following description. The skilled person will realize that different features of the present inventive concept may be combined to create variants other than those described in the following, without departing from the scope of the present inventive concept.

### Brief description of the drawings

The aspects of the present inventive concept, including its particular features and advantages, will be readily understood from the following detailed description and the accompanying drawings, in which:
Figure 1 is a schematic illustration of a microscope system.
Figure 2 is a schematic illustration of light-emitting elements containing a first set of light-emitting elements and a second set of light-emitting elements.
Figure 3 is a block scheme of a method for training a machine learning model to construct one or more images of a sample.
Figure 4 is a block scheme of a method for constructing one or more images of a sample using a trained machine learning model.
Figure 5 is a schematic illustration of a device for training a machine learning model.

### Detailed description

The present inventive concept will now be described more fully hereinafter with reference to the accompanying drawings, in which currently preferred variants of the inventive concept are shown and discussed. This inventive concept may, however, be implemented in many different forms and should not be construed as limited to the variants set forth herein; rather, these variants are provided for thoroughness and completeness, and fully convey the scope of the present inventive concept to the skilled person. As illustrated in the figures, features may be exaggerated for illustrative purposes and, thus, may be provided to illustrate the general structures of variants of the present inventive concept. Like reference numerals refer to like elements throughout the description.

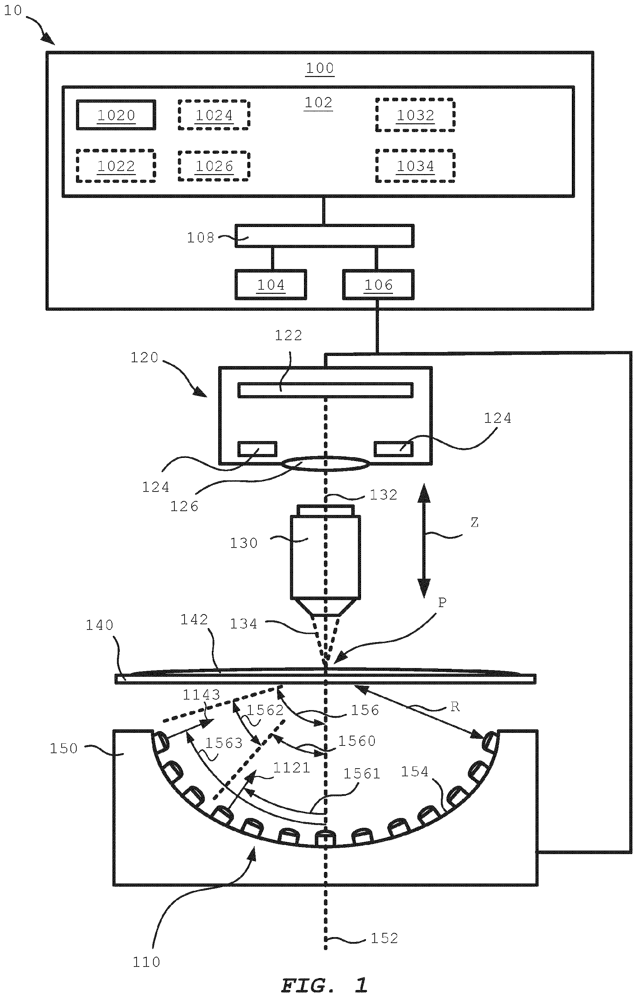

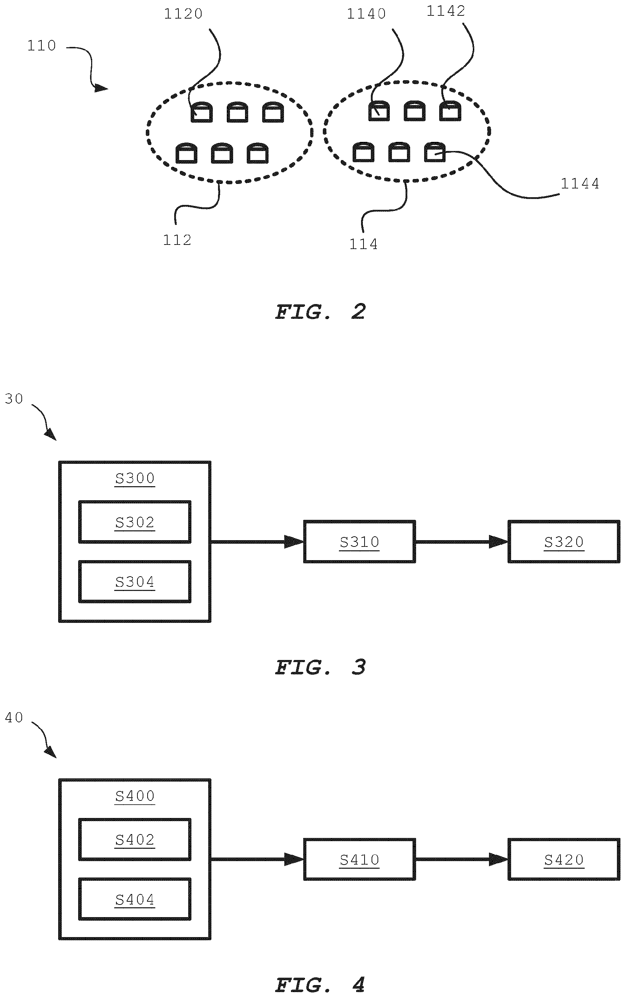

A microscopy system 10 suitable for acquiring a set of images which may be used as a training set of images when training a machine learning model to construct a image of a sample and/or as an input set of images when using a trained machine learning model to construct an image of a sample will now be described with reference to Fig. 1 and Fig. 2.

Figure 1 is a schematic illustration of a microscopy system 10. The microscopy system 10 comprises light-emitting elements 110, an image sensor 122, a microscope objective 130, and circuitry 100. As is illustrated in the example of Fig. 1, the light-emitting elements 110, 114 may form part of an illumination subsystem 150. The illumination subsystem 150 may have a central axis 152. The central axis 152 may be substantially parallel to an optical axis 132 of the microscope objective 130. As is further illustrated in the example of Fig. 1, the microscopy system 10 may further comprise a sample positioning assembly 140. The sample positioning assembly 140 may be configured to hold a sample 142. The sample 142 may be a biological sample. The sample 142 may be a cytological sample. Examples of biological samples comprise, but are not excluded to, blood, plasma, bone marrow fluid, etc. The sample 142 may be a non-biological sample. The non-biological sample may be a manmade sample or a naturally occurring sample. Examples of non-biological samples comprise, but are not excluded to, integrated circuits, optical components, microstructures, minerals, metals, etc. The sample positioning assembly 140 may be configured to move the sample 142. The sample positioning assembly 140 may be configured to move the sample 142 along a plane. A normal of that plane may be substantially parallel to the optical axis 132 of the microscope objective 130. It is further to be understood that the sample positioning assembly 140 may be configured to move the sample 142 in a direction substantially parallel to the optical axis 132 of the microscope objective 130. Put differently, the sample positioning assembly 140 may be configured to move the sample 142 in a focusing direction of the microscope objective 130. The circuitry 100 may be configured to control the sample positioning assembly 140. For instance, the circuitry 100 may be configured to execute a sample positioning function 1032. The sample positioning function 1032 may be configured to control the position of the sample 142 using the sample positioning assembly 140.

As is illustrated in the example of Fig. 1, the image sensor 122 may form part of a camera 120. The camera 120 may configured to capture images of the sample 142 using the image sensor 122. Thus, the camera 120 may comprise the image sensor 122 and/or a shutter 124. The image sensor 122 may comprise a charge-coupled device (CCD) sensor and/or a complementary metal-oxide-semiconductor (CMOS) sensor. Images captured by the image sensor 122 may be digital images. The image sensor 122 may be capable of capturing color images. To that end, the at least one image sensor 122 may comprise a color filter (e.g., a Bayer filter) to allow the image sensor 122 to capture color information of light impinging on the image sensor 122. The image sensor 122 may be capable of capturing grayscale images, and, in such case, the at least one image sensor 122 may not comprise a color filter. However, it is to be understood that the image sensor 122 may be capable of capturing grayscale images while still comprising a color filter. As is illustrated in the example of Fig. 1, the image sensor 122 may communicate with the circuitry 100 via a communication interface 106 of the circuitry 100. However, it is to be understood that the image sensor 122 may communicate with the circuitry 100 via the data bus 108. The shutter 124 may be configured to control a duration of light exposure of the image sensor 122. The shutter 124 may comprise a mechanical shutter. In an open state, which is illustrated in Fig. 1, the mechanical shutter may be configured to allow light to reach the image sensor 122 of the camera 120. In a closed state, the mechanical shutter may be configured to physically block light from reaching the image sensor 122 of the camera 120. The shutter 124 may comprise an electronic shutter. Thus, the shutter 124 may form part of the image sensor 122 (i.e., as an electronic shutter). In an open state, the electronic shutter may be configured to control the image sensor 122 to register light incident on the image sensor 122. In a closed state, the electronic shutter may be configured to control the image sensor 122 to not register light incident on the image sensor 122. An electronic shutter may offer high speed and less distortion compared to a mechanical shutter.

The microscope objective 130 is arranged to image the sample 142 onto the image sensor 122. For example, the microscope objective 130 may be positioned such that an object plane of the microscope objective 130 coincides with the sample 142 and an image plane of the microscope objective 130 coincides with the image sensor 122. It is to be understood that whether an image depicting the sample 142 is formed on the image sensor 122 may depend on the illumination of the sample 142. For instance, in case the sample 142 is illuminated with conventional microscope illumination (e.g., bright-field illumination), an image resembling the sample 142 may be formed on the image sensor 122. However, in case the sample 142 is illuminated at only a few illumination angles, or even at a single illumination angle, the image forming on the image sensor 122 may not resemble the sample 142. For instance, the sample 142 may be illuminated at illumination angles larger than an angle corresponding to a numerical aperture 134 of the microscope objective 130. In such case, the image formed on the image sensor 122 may not resemble the sample 142. However, even though the images may not resemble (or depict) the sample 142, those images may comprise information associated with the sample 142 and that information may be used when training the machine learning model and/or when using a trained machine learning model to construct the image of a sample. Even though not illustrated in the example of Fig. 1, it is to be understood that the camera 120 may comprise further components, e.g., one or more of an aperture, a lens, a window, color filters, etc. For instance, the camera 120 may, as is illustrated in Fig. 1, further comprise a relay lens 126. The relay lens 126 may be aligned with the microscope objective 130.

The microscope objective 130 may be movable along a direction Z substantially parallel to the optical axis 132 of the microscope objective 130. Put differently, the microscope objective 130 may be movable in a focusing direction. The microscope objective 130 may be movable along the direction Z by being coupled to a manual and/or motorized stage (not illustrated). The microscope objective 130 and/or the sample positioning assembly 140 may be movable such that a focused image of the sample 142 may be captured by the at least one image sensor 122. A position of the microscope objective 130 along the direction Z may be controlled by the circuitry 100. For example, the circuitry 100 may be configured to execute a focus function 1034 configured to adjust a position of the microscope objective 130 along the direction Z. The focus function 1034 may be configured to automatically adjust the position of the microscope objective 130 along the direction Z. Put differently, the focus function 1034 may be an autofocus function. Even though it is not illustrated in the example of Fig. 1, the focus function 1034 may control the position of the microscope objective 130 along the direction Z by communicating via the communication interface 106. However, it is to be understood that the focus function 1034 may be configured to control that position by communicating via the data bus 108.

As is illustrated in Fig. 2, the light-emitting elements 110 contains a first set of light-emitting elements 112, a second set of light-emitting elements 114. It is to be understood that a number of light-emitting elements 110, a number of light-emitting elements in the first set of light-emitting elements 112, and a number of light-emitting elements in the second set light-emitting elements as illustrated in Fig. 2 are examples only, and those numbers may vary. For instance, the number of light-emitting elements 1120 in the first set of light-emitting elements 112 may be equal to, or different from, the number of light-emitting elements 1140, 1142, 1144 in the second set of light-emitting elements 114. A light-emitting element 1120, 1140, 1142, 1144 of the first set and/or the second set of light-emitting elements 112, 114 may comprise one or more light emitters. It is to be understood that a light-emitting element 1120, 1140, 1142, 1144 may comprise a plurality of light emitters. Each light emitter of the plurality of light emitters may be configured to emit light having a respective spectrum. The spectra of light emitted by the plurality of light emitters may be partially overlapping and/or non-overlapping. A light emitter may be a light-emitting diode (LED). For instance, a light-emitting element 1120, 1140, 1142, 1144 of the first set and/or the second set of light-emitting elements 112, 114 may comprise one or more LEDs. An LED may be any type of LED, such as an ordinary LED bulb (i.e., traditional, and inorganic LEDs), a graphene LED, or an LED typically found in displays (e.g., quantum dot LEDs (QLEDs) or an organic LED (OLEDs)). However, other types of LEDs may be used as well.

The first set and the second set of light-emitting elements 112, 114 may comprise one or more adjustable light-emitting elements. For instance, a color and/or an intensity of light emitted by the one or more adjustable light-emitting elements may be adjustable. Thus, the circuitry 100 may be configured to adjust the one or more adjustable light-emitting elements. The light-emitting elements 110 may, as is illustrated in the example of Fig. 1, be arranged on a curved surface 154. As illustrated in the example of Fig. 1, the curved surface 154 may be concave along at least one direction along the surface. For example, the curved surface 154 may be a cylindrical surface. The curved surface 154 may be concave along two perpendicular directions along the surface. For example, the curved surface 154 may have a shape similar to a segment of a sphere. A segment of a sphere may be a spherical cap or a spherical dome. Arranging the first set and second set of light-emitting elements on a curved surface 154 may be advantageous in that a distance R from each light-emitting element to a current imaging position P of the microscope objective 130 may be similar. Since this distance R is similar, an intensity of light emitted from each light-emitting element of the light-emitting elements 110 may be similar at the current imaging position P. This may be understood as an effect of the inverse square law. Thus, the sample 142 may be illuminated by light having similar intensities at each illumination angle of the plurality of illumination angles, which may, in turn, allow for a more similar illumination of the sample 142 independent of illumination angle. The distance R from each light-emitting element to the current imaging position P may be in a range from 2 cm to 15 cm. It may be advantageous to configure the first set and the second set of light-emitting elements 112, 114 such that the distance R from each light-emitting element to the current imaging position P is large enough such that each light-emitting element may be treated as a point source. Hence, the distance R from each light-emitting element to the current imaging position P may be larger than 15 cm, given that an intensity of light from each light-emitting element at the current imaging position P is high enough to produce the set of images. However, it is to be understood that the first set and second set of light-emitting elements 112, 114 may be arranged on a flat surface or on a surface having an irregular shape. It is further to be understood that Fig. 1 illustrates a cross section of the microscope system 10, and in particular the illumination subsystem 150. Hence, the curved surface 154 illustrated in Fig. 1 may be a cylindrical surface or a portion of a spherical surface (or of a quasi-spherical surface). The curved surface 154 may be bowl shaped. The curved surface 154 may be formed of facets (not shown). Put differently, the curved surface 154 may be formed of a plurality of flat surfaces. Thus, the curved surface 154 may be piecewise flat. The curved surface 154 may be a portion of a quasi-spherical surface comprising a plurality of facets or segments. Hence, the curved surface 154 may be a portion of a surface of a polyhedron. An example of such polyhedron may be a truncated icosahedron. The first set and the second set of light-emitting elements 112, 114 may be arranged on the facets. Each light-emitting element may be arranged such that the light-emitting element is configured to emit light in a direction substantially parallel to a normal of the associated facet. Each facet may be a flat surface having at least three sides. For instance, the curved surface 154 may be formed of facets having five sides and/or facets having six sides (e.g., similar to an inner surface of a football or soccer ball). It is to be understood that each facet may be separate entities. Hence, the curved surface 154 may be formed by a plurality of parts, and each facet may be formed by one or more parts. It is further to be understood that each part may include one or more facets. Further, such parts may be arranged in contact with neighboring parts or may be arranged at a distance from neighboring parts. A single part may include all facets.

As is illustrated in the example of Fig. 1, each light-emitting element of the first set of light-emitting elements 112 and the second set of light-emitting elements 114 may be configured to illuminate a sample 142 at an illumination angle 1561, 1563 of a plurality of illumination angles 156. As is illustrated in the example of Fig. 1, an illumination angle may be an angle at which incident light illuminates the sample 142. An illumination angle may an angle at which incident light illuminates the current imaging position P. An illumination angle may therefore correspond to a direction 1121, 1143 from which a light-emitting element is configured to illuminate the sample 142. As is illustrated in the example of Fig. 1, an illumination angle 1561, 1563 may be defined relative to an optical axis 132 of the microscope objective 130. An illumination angle 1561, 1563 may be in a range from 0 degrees to 180 degrees. Further, no illumination angles may be smaller than 0 degrees, i.e., there may be no negative illumination angles. Furthermore, no illumination angles may be larger than 180 degrees. The plurality of illumination angles 156 may comprise illumination angles corresponding to non-overlapping portions of the Fourier space of the sample 142. However, two or more illumination angles of the plurality of illumination angles 156 may correspond to overlapping portions of a Fourier space associated with the sample 142. For instance, two neighboring light-emitting elements of the first set and/or the second set of light-emitting elements 112, 114 may be configured to illuminate the sample 142 at illumination angles corresponding to overlapping portions of the Fourier space associated with the sample 142. Thus, at least two illumination angles of two different illumination patterns may correspond to overlapping portions of the Fourier space associated with the sample 142. As is further illustrated in the example of Fig. 1, at least one illumination angle 1563 of the plurality of illumination angles 156 may be greater than an angle corresponding to the numerical aperture 134 of the microscope objective 130 used to acquire the set of images.

The first set of light-emitting elements 112 is configured to emit light having a first optical bandwidth. Each light-emitting element of the first set of light-emitting elements 112 may be configured to emit light having the first optical bandwidth. The first optical bandwidth may be 100 nm or broader. For instance, the light-emitting elements of the first set of light-emitting elements 112 may be configured to emit light having an optical bandwidth of 200 nm or broader. Put differently, each light-emitting element of the first set of light-emitting elements 112 may be configured to emit polychromatic light. Light having the first optical bandwidth may be produced by simultaneously (or at least partly simultaneously) emitting light from two or more light emitters each configured to emit narrow-band light (e.g., light of different colors, monochromatic, and/or quasi-monochromatic light). Put differently, a light-emitting element of the first set of light-emitting elements 112 may comprise two or more light emitters, wherein a first light emitter of the two or more light emitters may be configured to emit light having a first spectrum and a second light emitter of the two or more light emitters may be configured to emit light having a second spectrum different from the first spectrum, whereby a spectrum of light having the first optical bandwidth may comprise the first spectrum and the second spectrum. The first spectrum and the second spectrum may be partially overlapping. The first spectrum and the second spectrum may be non-overlapping. The spectrum of light having the first optical bandwidth may be continuous or discontinuous. The first set of light-emitting elements 112 may be configured to emit light having a wavelength within a first wavelength range. Put differently, light-emitting elements 1120 of the first set of light-emitting elements 112 may be configured to emit light having a wavelength within the first wavelength range. Light having a wavelength within the first wavelength range may appear as white light. However, it is to be understood that light having a wavelength within the first wavelength range may appear as other colors as well.

The second set of light-emitting elements 114 is configured to emit light having a second optical bandwidth. Each light-emitting element of the second set of light-emitting elements 114 may be configured to emit light having the second optical bandwidth. The second optical bandwidth is narrower than the first optical bandwidth. The second optical bandwidth may be 50 nm or narrower. For instance, the second optical bandwidth may be 20 nm or narrower. The second set of light-emitting elements 114 may comprise light-emitting elements 1140 configured to emit light having a wavelength within a second wavelength range different from the first wavelength range. The second set of light-emitting elements 114 may further comprise light-emitting elements 1142 configured to emit light having a wavelength within a third wavelength range different from the first wavelength range and the second wavelength range. The second set of light-emitting elements 114 may further comprise light-emitting elements 1144 configured to emit light having a wavelength within a fourth wavelength range different from the first wavelength range, the second wavelength range, and the third wavelength range. Put differently, light-emitting elements 1140, 1142, 1144 of the second set of light-emitting elements 114 may be configured to emit light having different colors. As an example, light having a wavelength within the second wavelength range may appear as green light. Further, light having a wavelength within the third wavelength range may appear as red light. Furthermore, light having a wavelength within the fourth wavelength range may appear as blue light. The second set of light-emitting elements 114 may thereby be configured to emit light having a combined spectrum covering more wavelengths, whereby more information (i.e., associated with the different colors of light emitted from the second set of light-emitting elements 114) regarding the sample 142 may be captured by the second set of light-emitting elements 114.

As is illustrated in the example of Fig. 1, the plurality of illumination angles 156 may comprise a first range of illumination angles 1560 and a second range of illumination angles 1562. Illumination angles 1563 of the second range 1562 may be greater than illumination angles 1561 of the first range 1560. A majority of the light-emitting elements configured to illuminate the sample 142 at illumination angles of the second range 1562 may belong to the second set of light-emitting elements 114. Light illuminating the sample 142 at great illumination angles may predominantly be emitted by light-emitting elements of the second set of light-emitting elements 114. Put differently, the sample 142 may predominantly be illuminated by light having a narrower optical bandwidth at greater illumination angles. A majority of the light-emitting elements configured to illuminate the sample 142 at illumination angles of the first range 1560 may belong to the first set of light-emitting elements 112. Light illuminating the sample 142 at small illumination angles may predominantly be emitted by light-emitting elements of the first set of light-emitting elements 112. Put differently, the sample 142 may at smaller illumination angles predominantly be illuminated by light having a broader optical bandwidth.

The functions which the circuitry 100 is configured to execute depends on whether the set of images is to be used when training the machine learning model (i.e., as a training set of images) or when using the trained machine learning model to construct one or more images of a sample (i.e. as an input set of images to a trained machined learning model). However, for both of these purposes, the circuitry 100 is configured to execute an acquisition function 1020. The acquisition function 1020 is configured to acquire an input set of images. To that end, the acquisition function 1020 is configured to control the first set of light-emitting elements 112 and the second set of light-emitting elements 114 to illuminate the sample 142 with a plurality of illumination patterns, and to control the image sensor 122 to capture an image for each illumination pattern of the plurality of illumination patterns. An illumination pattern of the plurality of illumination patterns may be formed by one or more light-emitting elements configured to illuminate the sample 142 at illuminations angles corresponding to non-overlapping portions of a Fourier space associated with the sample 142. An illumination pattern of the plurality of illumination patterns may be formed by activating (i.e., emitting light from) one or more light-emitting elements of the first set and/or the second set of light-emitting elements 112, 114. An illumination pattern of the plurality of illumination patterns may be formed by illuminating the sample 142 with light emitted by one or more light-emitting elements of the first set and/or the second set of light-emitting elements 112, 114. An illumination pattern may be formed by simultaneously illuminating the sample 142 at one or more illumination angles. Each illumination pattern of the plurality of illumination patterns may be formed by simultaneously illuminating the sample 142 at one or more illumination angles corresponding to non-overlapping portions of a Fourier space associated with the sample 142. At least two illumination angles of two different illumination patterns may correspond to overlapping portions of the Fourier space associated with the sample 142.

In case the acquired set of images should be used to train a machine learning model, the circuitry 100 is further configured to execute a ground truth receiving function 1022, and a training function 1024. Further, in such case, the sample 142 may be referred to as a training sample 142, and the set of images may be referred to as a training set of images. It should be noted that the training set of images may comprise images of multiple training samples. Thus, the training set of images may comprise one or more sets of images for one or more training samples. The ground truth receiving function 1022 is configured to receive a ground truth comprising one or more images of the training sample 142. The one or more images of the ground truth may comprise an amplitude image of the training sample 142. At least one image of the ground truth may depict the training sample 142. A resolution of at least one image of the one or more images of the ground truth may be higher than a resolution of at least one image of the training set of images. A resolution of the at least one image depicting the training sample 142 may be higher than a resolution of at least one image of the training set of images. An image having a higher resolution than a resolution of at least one image of the training set of images may be captured using a further microscope objective. The further microscope objective may have a magnification higher than a magnification of the microscope objective used to acquire the training set of images. Using a further microscope objective to acquire an image for the ground truth may enhance a quality of the ground truth, in particular in comparison to using an image reconstructed (e.g., using a conventional Fourier ptychography reconstruction algorithm) from the training set of images. At least one image of the one or more images of the ground truth may be a complex-valued image of the training sample 142. The complex-valued image of the training sample 142 may comprise phase information associated with the training sample 142.

The training function 1024 is configured to train the machine learning model to construct one or more images of a sample using the received training set of images and the received ground truth. The machine learning model may be trained to correlate the training set of images to the ground truth (e.g., the one or more images of the training sample 142). The machine learning model may be trained iteratively and/or recursively until a difference between an output of the machine learning model (i.e., the one or more constructed images) and the ground truth (i.e., the one or more images of the training sample 142) is smaller than a predetermined threshold. A smaller difference between the output of the machine learning model and the ground truth may indicate a higher accuracy of the constructed image provided by the machine learning model. Put differently, a smaller difference between the output of the machine learning model and the ground truth may indicate that the one or more constructed images may to a higher degree replicate the training sample 142. Hence, preferably, the difference between the output of the machine learning model and the ground truth may be minimized. The machine learning model may be trained to construct images of samples for a plurality of different sample types. In such case, the machine learning model may, for each sample type, be trained using a training set of images of a training sample of the sample type, and a corresponding ground truth associated with the respective sample type.

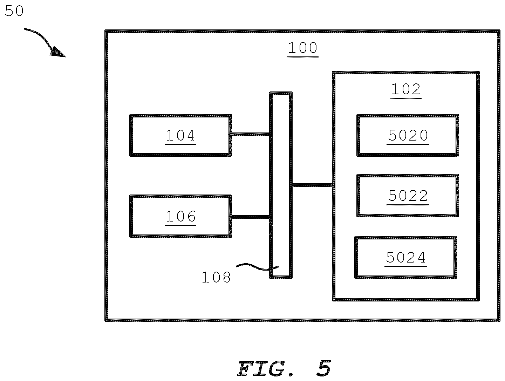

It is to be understood that the training of the machine learning model does not necessarily need to be performed in connection with capturing the training set of images (e.g., using the microscope system 10 illustrated in Fig. 1). As an example, the training set of images may be captured and stored in a memory (e.g., a non-transitory computer-readable storage medium) and the training may be performed using a separate device. In such case, the circuitry 100 may form part of a device 50 for training a machine learning model to construct an image of a sample. Figure 5 is a schematic illustration of such device 50. The device 50 may be an electronic device. For instance, the electronic device may, e.g., be a computer, a server, a smartphone, a cloud server, etc. The electronic device may comprise further components, such as a display, input devices (e.g., mouse and/or keyboard), etc. The circuitry 100 of the device 50 is configured to execute a training set receiving function 5020, a ground truth receiving function 5022, and a training function 5024. The training set receiving function 5020 is configured to receive the training set of images of the training sample 142. The ground truth receiving function 5022 and the training function 5024 performs the same functions as the ground truth receiving function 1022 and training function 1024, respectively, discussed in connection with Fig. 1 and reference is therefore made to the above to avoid undue repetition.

In case the acquired set of images should be used to construct one or more images of a sample using a trained machine learning model, the circuitry 100 is further configured to execute an image construction function 1026 as is illustrated in the example of Fig. 1. Further, in such case, the sample 142 may simply be referred to as a sample 142, and the set of images may be referred to as an input set of images. It is to be understood that the input set of images may be captured in a similar manner as the training set of images used to train the machine learning model into which the input set of images is to be input.

The image construction function 1026 is configured to input the input set of images into a trained machine learning model (i.e., trained as described herein), and receive, from the machine learning model, an output comprising one or more constructed images of the sample 142. The output from the machine learning model may be similar to the ground truth used when training the machine learning model. For instance, in case the machine learning model is trained using an amplitude image of the sample 142 and/or a complex-valued image of the sample 142, the output may comprise a constructed amplitude image of the sample 142 and/or a constructed complex-valued image of the sample 142.

Even though the circuitry 100 is illustrated as a separate entity in Fig. 1, it is to be understood that the circuitry 100 may form part of an electronic device. The electronic device may, e.g., be a computer, a server, a smartphone, etc. The electronic device may be a local electronic device (i.e., arranged in proximity of the other parts of the microscope system) or a remote electronic device. Non-limiting examples of a remote electronic device may be a server, a cloud server, a remote computer, a remote smartphone, etc. It is further to be understood that the functionality of the circuitry 100 may be distributed over more than one electronic device. The electronic device may comprise further components, for example input devices (mouse, keyboard, touchscreen, etc.) and/or a display. As is illustrated in the example of Fig. 1, the circuitry 100 may comprise one or more of a memory 102, a processing unit 104, a communication interface 106, and a data bus 108. The memory 102, the processing unit 104, and the communication interface 106 may communicate (e.g., exchange data) via the data bus 108. The processing unit 104 may comprise a central processing unit (CPU) and/or a graphical processing unit (GPU). The communication interface 106 may be configured to communicate with external devices. For example, the communication interface 106 may be configured to communicate with servers, computers, external peripherals (e.g., external storage), etc. The external devices may be local devices or remote devices (e.g., a cloud server). The communication interface 106 may be configured to communicate with the external devices via an external network (e.g., a local-area network, the internet, etc.). The communication interface 106 may comprise a transceiver. The communication interface 106 may be configured for wireless and/or wired communication. Suitable technologies for wireless communication are known to the skilled person. Some non-limiting examples comprise Wi-Fi and Near-Field Communication (NFC). Suitable technologies for wired communication are known to the skilled person. Some non-limiting examples comprise USB, Ethernet, and Firewire.

The memory 102 may be a non-transitory computer-readable storage medium. The memory 102 may be a random-access memory. The memory 102 may be a non-volatile memory. As is illustrated in the example of Fig. 1, the memory 102 may store program code portions 1020, 1022, 1024, 1026, 1032, 1034 corresponding to one or more functions. The program code portions 1020, 1022, 1024, 1026, 1032, 1034 may be executable by the processing unit 104, which thereby performs the functions. Hence, when it is referred to that the circuitry 100 is configured to execute a specific function, the processing unit 104 may execute program code portions 1020, 1022, 1024, 1026, 1032, 1034 corresponding to the specific function which may be stored on the memory 102. However, it is to be understood that one or more functions of the circuitry 100 may be hardware implemented and/or implemented in a specific integrated circuit. For example, one or more functions may be implemented using field-programmable gate arrays (FPGAs). Hence, one or more functions of the circuitry 100 may be implemented in hardware or software, or as a combination of the two.

Figure 3 is a block scheme of a method 30 for training a machine learning model to construct one or more images of a sample 142. The method 30 comprises: acquiring S300 a training set of images of a training sample 142 by: illuminating S302 the training sample 142 with a plurality of illumination patterns formed by a first set of light-emitting elements 112 and a second set of light-emitting elements 114, wherein the first set of light-emitting elements 112 is configured to emit light having a first optical bandwidth and the second set of light-emitting elements 114 is configured to emit light having a second optical bandwidth narrower than the first optical bandwidth, and capturing S304, for each illumination pattern of the plurality of illumination patterns, an image of the training sample 142; receiving S310 a ground truth comprising one or more images of the training sample 142; and training S320 the machine learning model to construct the one or more images of a sample using the training set of images and the ground truth. The first optical bandwidth may be 100 nm or broader. The second optical bandwidth may be 50 nm or narrower. A resolution of at least one image of the one or more images of the ground truth may be higher than a resolution of at least one image of the training set of images. At least one image of the one or more images of the ground truth may be a complex-valued image of the training sample 142. The first set of light-emitting elements 112 may be configured to emit light having a wavelength within a first wavelength range, and the second set of light-emitting elements 114 may comprise light-emitting elements configured to emit light having a wavelength within a second wavelength range different from the first wavelength range. The second set of light-emitting elements 114 may further comprise light-emitting elements configured to emit light having a wavelength within a third wavelength range different from the first wavelength range and the second wavelength range. The second set of light-emitting elements 114 may further comprise light-emitting elements configured to emit light having a wavelength within a fourth wavelength range different from the first wavelength range, the second wavelength range, and the third wavelength range. Each light-emitting element of the first set of light-emitting elements 112 and the second set of light-emitting elements 114 may be configured to illuminate the training sample 142 at an illumination angle of a plurality of illumination angles. The plurality of illumination angles may comprise a first range of illumination angles and a second range of illumination angles. Illumination angles of the second range may be greater than illumination angles of the first range. A majority of the light-emitting elements configured to illuminate the training sample 142 at illumination angles of the second range may belong to the second set of light-emitting elements 114. A majority of the light-emitting elements configured to illuminate the training sample 142 at illumination angles of the first range may belong to the first set of light-emitting elements 112. An illumination pattern of the plurality of illumination patterns may be formed by one or more light-emitting elements configured to illuminate the training sample 142 at illuminations angles corresponding to non-overlapping portions of a Fourier space associated with the training sample 142. At least one illumination angle of the plurality of illumination angles may be greater than an angle corresponding to a numerical aperture of a microscope objective 130 used to acquire the training set of images.

Figure 4 is a block scheme of a method 40 for constructing one or more images of a sample 142. The method 40 comprises: acquiring S400 an input set of images of the sample 142 by: illuminating S402 the sample 142 with a plurality of illumination patterns formed by a first set of light-emitting elements 112 and a second set of light-emitting elements 114, wherein the first set of light-emitting elements 112 is configured to emit light having a first optical bandwidth and the second set of light-emitting elements 114 is configured to emit light having a second optical bandwidth narrower than the first optical bandwidth, and capturing S404, for each illumination pattern of the plurality of illumination patterns, an image of the sample 142; inputting S410 the input set of images into a machine learning model trained according to the method 30 illustrated in Fig. 3; and receiving S420, from the machine learning model, an output comprising one or more constructed images of the sample 142.

A skilled person would be aware of machine learning, and in particular as to how a machine learning model may be trained and/or how a trained machine learning model may be used. However, in brief, the machine learning model may be a type of supervised machine learning model, for example a network such as U-net or Pix2pix. The machine learning model may be a transformer-based network such as SwinIR. The machine learning model may be a convolutional neural network. The machine learning model may be trained to predict a desired output using example input training data and a ground truth, i.e., the "correct" or "true" output. Put differently, the ground truth may be used as a label for the input training data. The input training data may comprise data pertaining to different outcomes, and each input training data may thereby be associated with a ground truth associated with that particular input training data. Hence, each input training data may be labelled with an associated ground truth (i.e., "correct" or "true" output). The machine learning model may comprise a plurality of layers of neurons, and each neuron may represent a mathematical operation which is applied to the input training data. Typically, the machine learning model comprises an input layer, one or more hidden layers, and an output layer. The first layer may be referred to as the input layer. The output of each layer (except the output layer) in the machine learning model may be fed to a subsequent layer, which in turn produces a new output. The new output may be fed to a further subsequent layer. The output of the machine learning model may be an output of the output layer. The process may be repeated for all layers in the machine learning model. Typically, each layer further comprises an activation function. The activation function may further define the output of a neuron of the layer. For example, the activation function may ensure that the output from a layer is not too large or too small (e.g., tending towards positive or negative infinity). Further, the activation function may introduce non-linearity into the machine learning model. During the training process, weights and/or biases associated with the neurons of the layers may be adjusted until the machine learning model produces predictions for the input training data that reflect the ground truth. Each neuron may be configured to multiply the input to the neuron with a weight associated with that neuron. Each neuron may be further configured to add a bias associated with that neuron to the input. Put differently, an output from a neuron may be a sum of the bias associated with the neuron and a product of the weight associated with the neuron and the input. The weights and biases may be adjusted in a recursive process and/or an iterative process. This may be known as backpropagation within the art. A convolutional neural network may be a type of neural network comprising one or more layers that represents a convolution operation. In this context, the input training data comprises digital images. A digital image may be represented as matrix (or as an array), and each element in the matrix (or array) may represent a corresponding pixel of the digital image. The value of an element may thereby represent a pixel value and/or color value of the corresponding pixel in the digital image. Hence, the input and output to the machine learning model may be numerical (e.g., a matrix or an array) representing digital images. In this context, the input is a set of digital images (i.e., the training set or the input set). Thus, the input to the machine learning model may be a plurality of matrices, or a three-dimensional matrix. It is, however, to be understood that the machine learning model may take further input during training. In this specific case, the machine learning model is trained using a training set of digital images and a ground truth. The training set of images is acquired in a manner similar to the acquisition of the input set of images. Put differently, the illumination patterns used when acquiring the training set of images and the input set of images may be similar or even identical. The machine learning model may be trained using the training set of images as input and the ground truth as the desired output. Put differently, the machine learning model may be trained until a difference between an output of the machine learning model and the ground truth is smaller than a threshold. This difference may within the art be described by a loss function. It may be preferred to train the machine learning model until the loss function is minimized. Put differently, the machine learning model may be trained until the difference between the output of the machine learning model and the ground truth is minimized. The training process may be repeated for a plurality of different training samples (e.g., different training samples of the same and/or of different types), which may allow for the machine learning model to construct digital images of a wider range of sample types and/or with higher accuracy.

The person skilled in the art realizes that the present inventive concept by no means is limited to the preferred variants described above. On the contrary, many modifications and variations are possible within the scope of the appended claims. Additionally, variations to the disclosed variants can be understood and effected by the skilled person in practicing the claimed invention, from a study of the drawings, the disclosure, and the appended claims.

## Claims

1. A method (30) for training a machine learning model to construct one or more images of a sample, the method (30) comprising:
acquiring (S300) a training set of images of a training sample (142) by:
illuminating (S302) the training sample (142) with a plurality of illumination patterns formed by a first set of light-emitting elements (112) and a second set of light-emitting elements (114), wherein the first set of light-emitting elements (112) is configured to emit light having a first optical bandwidth and the second set of light-emitting elements (114) is configured to emit light having a second optical bandwidth narrower than the first optical bandwidth, and
capturing (S304), for each illumination pattern of the plurality of illumination patterns, an image of the training sample (142);
receiving (S310) a ground truth comprising one or more images of the training sample (142); and
training (S320) the machine learning model to construct the one or more images of a sample using the training set of images and the ground truth.

2. The method (30) according to claim 1, wherein the first optical bandwidth is 100 nm or broader.

3. The method (30) according to claim 1 or 2, wherein the second optical bandwidth is 50 nm or narrower.

4. The method (30) according to any one of claims 1-3, wherein a resolution of at least one image of the one or more images of the ground truth is higher than a resolution of at least one image of the training set of images.

5. The method (30) according to any one of claims 1-4, wherein at least one image of the one or more images of the ground truth is a complex-valued image of the training sample (142).

6. The method (30) according to any one of claims 1-5, wherein the first set of light-emitting elements (112) is configured to emit light having a wavelength within a first wavelength range, and the second set of light-emitting elements (114) comprises light-emitting elements configured to emit light having a wavelength within a second wavelength range different from the first wavelength range.

7. The method (30) according to claim 6, wherein the second set of light-emitting elements (114) further comprises light-emitting elements configured to emit light having a wavelength within a third wavelength range different from the first wavelength range and the second wavelength range.

8. The method (30) according to claim 7, wherein the second set of light-emitting elements (114) further comprises light-emitting elements configured to emit light having a wavelength within a fourth wavelength range different from the first wavelength range, the second wavelength range, and the third wavelength range.

9. The method (30) according to any one of claims 1-8, wherein each light-emitting element of the first set of light-emitting elements (112) and the second set of light-emitting elements (114) is configured to illuminate the training sample (142) at an illumination angle (1561, 1563) of a plurality of illumination angles (156).

10. The method (30) according to claim 9, wherein the plurality of illumination angles (156) comprises a first range of illumination angles (1560) and a second range of illumination angles (1562), illumination angles (1563) of the second range (1562) being greater than illumination angles (1561) of the first range (1560); and
wherein a majority of the light-emitting elements configured to illuminate the training sample (142) at illumination angles of the second range (1562) belongs to the second set of light-emitting elements (114).

11. The method (30) according to claim 10, wherein an illumination pattern of the plurality of illumination patterns is formed by one or more light-emitting elements configured to illuminate the training sample (142) at illuminations angles corresponding to non-overlapping portions of a Fourier space associated with the training sample (142).

12. The method (30) according to claim 10 or 11, wherein at least one illumination angle (1563) of the plurality of illumination angles (156) is greater than an angle corresponding to a numerical aperture (134) of a microscope objective (130) used to acquire the training set of images.

13. A method (40) for constructing one or more images of a sample (142), the method (40) comprising:
acquiring (S400) an input set of images of the sample (142) by:
illuminating (S402) the sample (142) with a plurality of illumination patterns formed by a first set of light-emitting elements (112) and a second set of light-emitting elements (114), wherein the first set of light-emitting elements (112) is configured to emit light having a first optical bandwidth and the second set of light-emitting elements (114) is configured to emit light having a second optical bandwidth narrower than the first optical bandwidth, and
capturing (S404), for each illumination pattern of the plurality of illumination patterns, an image of the sample (142);
inputting (S410) the input set of images into a machine learning model trained according to the method (30) of any one of claims 1-12; and
receiving (S420), from the machine learning model, an output comprising one or more constructed images of the sample (142).

14. A device (50) for training a machine learning model to construct an image of a sample (142), the device (50) comprising circuitry (100) configured to execute:
a training set receiving function (5020) configured to receive a training set of images of a training sample (142), wherein the training set of images is acquired by:
illuminating the training sample (142) with a plurality of illumination patterns formed by a first set of light-emitting elements (112) and a second set of light-emitting elements (114), wherein the first set of light-emitting elements (112) is configured to emit light having a first optical bandwidth and the second set of light-emitting elements (114) is configured to emit light having a second optical bandwidth narrower than the first optical bandwidth, and
capturing an image of the training sample (142) for each illumination pattern of the plurality of illumination patterns;
a ground truth receiving function (5022) configured to receive a ground truth comprising one or more images of the training sample (142); and
a training function (5024) configured to train the machine learning model to construct the image of a sample using the received training set of images and the received ground truth.

15. A microscopy system (10) comprising:
a first set of light-emitting elements (112) configured to emit light having a first optical bandwidth; and
a second set of light-emitting elements (114) configured to emit light having a second optical bandwidth narrower than the first optical bandwidth;
an image sensor (122);
a microscope objective (130) arranged to image a sample (142) onto the image sensor (122); and
circuitry (100) configured to execute:
an acquisition function (1020) configured to acquire an input set of images by being configured to:
control the first set of light-emitting elements (112) and the second set of light-emitting elements (114) to illuminate the sample (142) with a plurality of illumination patterns, and
control the image sensor (122) to capture an image for each illumination pattern of the plurality of illumination patterns, and
the circuitry (100) being further configured to execute:
an image construction function (1026) configured to:
input the input set of images into a machine learning model trained according to the method (30) of any one of claims 1-12, and
receive, from the machine learning model, an output comprising a constructed image of the sample (142).
